# EUROPÄISCHE PATENTSCHRIFT

(11) **EP 1 415 875 B1**
(45) Veröffentlichungstag und Bekanntmachung des Hinweises auf die Patenterteilung: **24.05.2006**
(21) Anmeldenummer: 03022689.8
(22) Anmeldetag: 07.10.2003
(51) Int. Cl.: B60T 7/10

(54) **Betätigungseinrichtung für eine Bremse**
Brake actuator
Actionneur d'un frein

(30) Priorität: 28.10.2002 DE 10250139
(43) Veröffentlichungstag der Anmeldung: 06.05.2004
(73) Patentinhaber: STILL GMBH, D-22113 Hamburg (DE)
(72) Erfinder: Buchmann, Michael, 21509 Glinde (DE)
(74) Vertreter: Geirhos, Johann

(56) Entgegenhaltungen:
- DE-A- 10 027 019
- US-A- 5 243 856
- US-A- 6 016 718

## Beschreibung

Die Erfindung betrifft eine Betätigungseinrichtung für eine manuell betätigbare Bremse, insbesondere Feststellbremse, eines Flurförderzeugs, mit einem schwenkbar gelagerten Betätigungshebel, der mittels eines Übertragungsmittels mit der Bremse in Wirkverbindung steht, wobei der Betätigungshebel einen Handhebel und ein mittels des Handhebels betätigbares Mitnehmerelement aufweist, das Mitnehmerelement mit dem Übertragungsmittel in Verbindung steht und bei in der Bremsstellung oder der Lösestellung befindlichem Mitnehmerelement der Handhebel bewegbar ist.

Derartige Betätigungseinrichtungen für die Feststellbremse eines Flurförderzeugs, insbesondere eines Gegengewichtsgabelstaplers, können seitlich neben einem Fahrerarbeitsplatz, beispielsweise einem Fahrersitz, auf einer Motor- oder Batteriehaube angeordnet sein. Alternativ kann die Betätigungseinrichtung an dem vorderen Bereich des Fahrerschutzdaches, dem sogenannten Vorderaufbau, eines Gegengewichtsgabelstaplers, angeordnet werden.

Bei der Anordnung der Betätigungseinrichtung am Vorderaufbau des Flurförderzeugs ragt der Betätigungshebel in der Lösestellung oder der Bremsstellung in den Bereich des Fahrerarbeitsplatzes. Hierdurch kann es zu einer Behinderung für die Bedienperson insbesondere während des Auf- und Absteigens kommen. Ist an der Betätigungseinrichtung keine Feststelleinrichtung für die Bremsstellung oder Lösestellung vorgesehen, kann es bei einer zufälligen Berührung des Betätigungshebels während des Auf- bzw. Absteigens zu einem ungewollten Betätigen des Betätigungshebels und somit zu einem Betätigen oder Lösen der Feststellbremse kommen. Insbesondere bei Betätigungseinrichtungen, bei denen der Betätigungshebel in der Bremsstellung in den Fahrerarbeitsplatz hineinragt, kann durch eine zufällige Berührung des Betätigungshebels während des Auf- oder Absteigens der Bedienperson die Feststellbremse ungewollt gelöst werden.

Gattungsgemäße Betätigungseinrichtungen sind aus der US 6 016 718, der US 5 243 856 sowie der DE 100 27 019 A1 bekannt. Bei in der Bremsstellung befindlichem Mitnehmerelement ist der Betätigungshebel in die Lösestellung zurückschwenkbar.

Diese Bremsbetätigungseinrichtungen sind als Ratschenbremsen ausgebildet, wobei das Mitnehmerelement mittels einer Sperrklinke mit einem Zahnsegment zusammenwirkt. Derartige als Ratschenbremsen ausgebildete Bremsbetätigungseinrichtungen weisen jedoch einen hohen Bauaufwand und Platzbedarf auf.

Der vorliegenden Erfindung liegt die Aufgabe zugrunde, eine Betätigungseinrichtung der eingangs genannten Gattung zur Verfügung zu stellen, die eine Behinderung der Bedienperson vermeidet und eine hohe Sicherheit gegen ungewolltes Betätigen aufweist.

Diese Aufgabe wird erfindungsgemäß dadurch gelöst, dass in der Bremsstellung eine Totpunktverriegelung des Mitnehmerelements vorgesehen ist. Erfindungsgemäß ist somit der Betätigungshebel in einen manuell betätigbaren Handhebel und ein durch den Handhebel betätigbares Mitnehmerelement geteilt, das mittels des Übertragungsmittels, beispielsweise eines Bremsseils oder eines Bremsgestänges, mit der Bremse in Wirkverbindung steht, wobei in der Bremsstellung eine Totpunktverriegelung des Mitnehmerelements vorgesehen ist, mit der auf einfache Weise das Mitnehmerelement in der Bremsstellung gehalten werden kann. Der Handhebel kann somit unabhängig von dem Mitnehmerelement bewegt werden. Hierdurch wird auf einfache Weise erzielt, dass der Handhebel bei in der Lösestellung oder der Bremsstellung befindlichem Mitnehmerelement in die jeweilige andere Stellung geschwenkt werden kann. Ein Hineinragen des Bedienhebels in den Fahrerarbeitsplatz und eine unbeabsichtigtes Betätigen des Handhebels kann somit wirkungsvoll vermieden werden.

Gemäß einer bevorzugten Ausführungsform der Erfindung ist bei in der Bremsstellung befindlichem Mitnehmerelement der Handhebel in die Lösestellung betätigbar. Bei einer Betätigungseinrichtung, bei der in der Bremsstellung der Betätigungseinrichtung der Handhebel in den Fahrerarbeitsplatz hineinragt, kann somit erzielt werden, dass bei in der Bremsstellung befindlichem Mitnehmerelement der Handhebel in die Lösestellung zurückverschwenkt werden kann. Bei in der Bremsstellung befindlicher Betätigungseinrichtung wird hierdurch eine Behinderung der Bedienperson während des Auf- und Absteigens vermeiden, wodurch weiterhin ein versehentliches Betätigen des Handhebels und somit ein ungewolltes Lösen der Bremse wirkungsvoll verhindert werden kann.

Besondere Vorteile ergeben sich, wenn gemäß einer Ausgestaltungsform der Erfindung das Mitnehmerelement als Mitnehmerhebel ausgebildet ist, wobei der Handhebel und der Mitnehmerhebel um eine gemeinsame Drehachse schwenkbar gelagert sind.

Bei einer Betätigung des Handhebels von der Lösestellung in die Bremsstellung kann auf einfache Weise das Mitnehmerelement von der Lösestellung in die Bremsstellung beaufschlagt werden, wenn das Mitnehmerelement mit einer mit dem Handhebel in Wirkverbindung bringbaren Mitnehmereinrichtung versehen ist.

Die Mitnehmereinrichtung kann auf einfache Weise als an dem Mitnehmerhebel angeordneter Querriegel ausgebildet werden.

Das Mitnehmerelement kann gemäß einer bevorzugten Ausgestaltungsform der Erfindung als Kniehebel ausgebildet ist. Bei Ausbildung der Bremse als Kniehebelbremse; kann somit ein unbeabsichtigtes Betätigen des Handhebels und eine Behinderung der Bedienperson während des Auf- bzw. Absteigens vermieden werden.

Zweckmäßigerweise ist ein Anschlag für die Lösestellung vorgesehen, der mit dem Handhebel in Wirkverbindung bringbar ist.

Wenn gemäß einer Weiterbildung der Erfindung der Handhebel an dem Anschlag für die Lösestellung mittels einer Feststelleinrichtung festsetzbar ist, kann ein Zurückfallen des Handhebels in die Bremsstellung und eine Geräuschbildung durch Klappern des Handhebels während des Betriebs des Flurförderzeugs vermieden werden.

Die Feststelleinrichtung ist mit besonderem Vorteil als Feder oder Einrastelement ausgebildet.

Ein Anschlag für die Bremsstellung ist zweckmäßigerweise mit dem Mitnehmerelement in Wirkverbindung bringbar.

Das Mitnehmerelement kann mittels des Handhebels auf einfache Weise von der Bremsstellung in die Lösestellung beaufschlagt werden, wenn gemäß einer vorteilhaften Weiterbildung der Erfindung ein Kopplungselement vorgesehen ist mittels dem das Mitnehmerelement mit dem Handhebel zum Beaufschlagen des Mitnehmerelements von der Bremsstellung in die Lösestellung verbindbar ist.

Das Kopplungselement kann gemäß einer Ausführungsform als Verriegelungsstift ausgebildet werden.

Ein geringer Bauaufwand ergibt sich, wenn das Kopplungselement am Handhebel angeordnet ist und mit der Mitnehmereinrichtung des Mitnehmerelements in Wirkverbindung bringbar ist.

Zweckmäßigerweise ist das Kopplungselement mittels eines Betätigungsmittels betätigbar. Mit einem Betätigungsmittel kann das Kopplungselement auf einfache Weise betätigt und somit der Handhebel mit dem Mitnehmerelement zum Lösen der Bremse gekoppelt werden.

Das Betätigungsmittel kann als an dem Betätigungshebel angeordneter Betätigungsknopf ausgebildet sein. Zudem ist es möglich, das Betätigungsmittel als an dem Handhebel angeordneten Hebel auszubilden.

Eine erhöhte Betriebssicherheit der Bremse ist erzielbar, wenn das Mitnehmerelement in der Bremsstellung mittels einer Feststellelement festsetzbar ist. Hierdurch kann das Mitnehmerelement in der Bremsstellung sicher fixiert werden.

Das Feststellelement ist zweckmäßigerweise als Einrastelement ausgebildet.

Hinsichtlich einer einfachen Bedienung ist es vorteilhaft, wenn das Feststellelement mittels des Betätigungsmittels lösbar ist. Durch Betätigen des Betätigungsmittels kann somit gleichzeitig das Kopplungselement zur Verbindung des Mitnehmerelements mit dem Handhebel betätigt und das Feststellelement gelöst werden. Zum Lösen der Bremse ist somit von der Bedienperson lediglich das Betätigungsmittel zu betätigen.

Besondere Vorteile ergeben sich, wenn die Betätigungseinrichtung am Vorderaufbau eines als Gegengewichtsgabelstapler ausgebildeten Flurförderzeugs angeordnet ist. In der Bremsstellung kann durch das Zurückschwenken des Handhebels in die Lösestellung eine Behinderung der Bedienperson beim Auf- und Absteigen sowie ein unbeabsichtigtes Betätigen der Betätigungseinrichtung in die Lösestellung vermieden werden, wodurch ein hohe Sicherheit der Betätigungseinrichtung gegen unbeabsichtigtes Betätigen erzielt wird.

Weitere Vorteile und Einzelheiten der Erfindung werden anhand des in den schematischen Figuren dargestellten Ausführungsbeispiels näher erläutert. Hierbei zeigt
- Figur 1: ein Flurtörderzeug mit einer Betätigungseinrichtung des Standes der Technik,
- Figur 2: eine erfindungsgemäße Betätigungseinrichtung in der Lösestellung,
- Figur 3: die Betätigungseinrichtung gemäß der Figur 2 in der Bremsstellung,
- Figur 4: die Betätigungseinrichtung gemäß der Figur 2 in der Bremsstellung bei zurückgeschwenktem Handhebel und
- Figur 5: die erfindungsgemäße Betätigungseinrichtung bei einer Beaufschlagung der Bremse von der Bremsstellung in die Lösestellung.

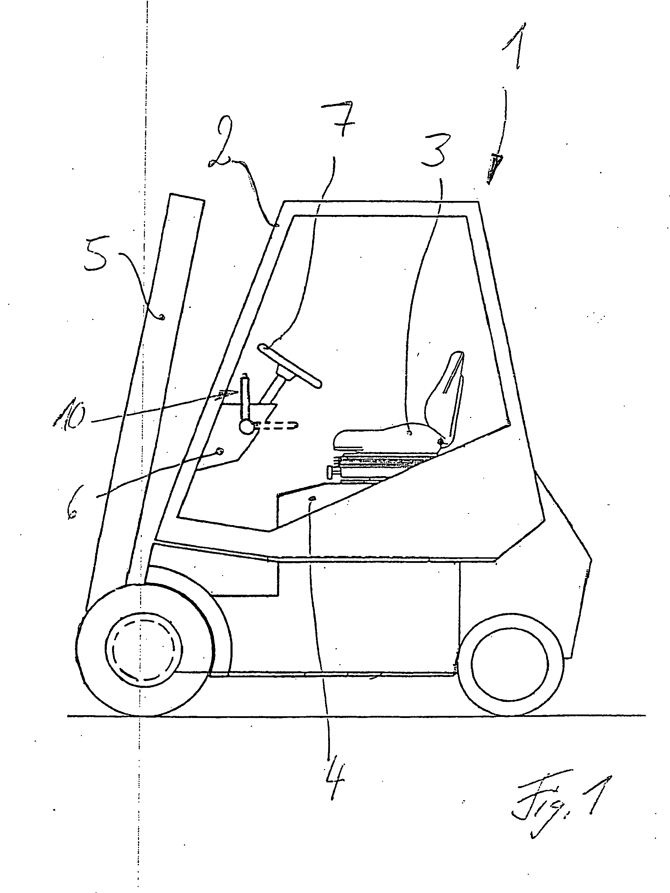

In der Figur 1 ist ein als Gegengewichtsgabelstapler ausgebildetes Flurförderzeug 1 dargestellt. Innerhalb eines Fahrerschutzdaches 2 ist ein Fahrerarbeitsplatz ausgebildet, der beispielsweise von einem Fahrersitz 3 gebildet ist. Der Fahrersitz 3 kann auf eine Batterie- oder Motorhaube 4 angeordnet sein. Im vorderen, einem Hubmast 5 zugewandten Bereich des Fahrerschutzdaches 2, dem sogenannten Vorderaufbau, ist eine Bedienkonsole 6, beispielsweise ein Armaturenbrett, angeordnet. An der Bedienkonsole 6 ist eine Lenkrad 7 und eine als Betätigungshebel 10 ausgebildete Betätigungseinrichtung für eine beispielsweise als Feststellbremse ausgebildete Bremse angeordnet.

In der vertikalen Stellung befindet sich der Betätigungshebel 10 in einer Lösestellung, in der die Bremse,gelöst ist. In der gestrichelt dargestellten nahezu horizontalen Stellung befindet sich der Betätigungshebel 10 in der Bremsstellung, in der die Bremse in die Bremsstettung beaufschlagt ist. Wie aus der Figur 1 ersichttich ist, ragt der Betätigungseinrichtung 10 in der Bremsstellung in den Fahrerarbeitsplatz hinein und beengt den zum Auf- und Absteigen zur Verfügung stehenden Raum für die Bedienperson. Durch eine unbeabsichtigte Berührung der Betätigungseinrichtung 10, insbesondere während des Auf- bzw. Absteigens kann es hierdurch zu einem ungewollten Betätigen des Betätigungshebels 10 in die Lösestellung und somit zu einem unbeabsichtigten Lösen der Bremse kommen.

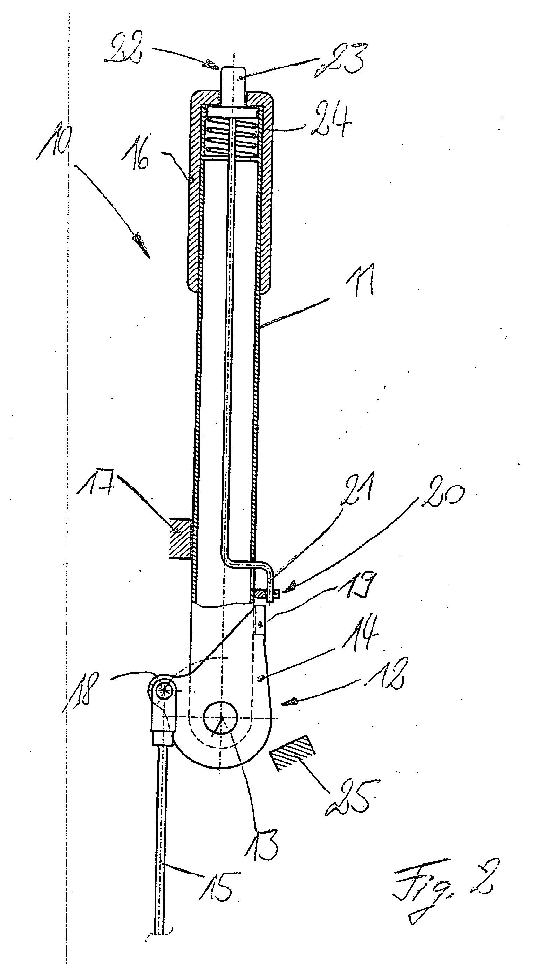

In der Figur 2 ist eine erfindungsgemäße, einen Betätigungshebel 10 umfassende Betätigungseinrichtung gezeigt. Der Betätigungshebel 10 weist einen Handhebel 11 und ein Mitnehmerelement 12 auf. Das Mitnehmerelement 12 und der Handhebel 11 sind um eine gemeinsame Drehachse 13 drehbar gelagert. Das Mitnehmerelement 12 ist als Mitnehmerhebel 14, insbesondere Kniehebel, ausgebildet, an dem von der Drehachse 13 beabstandet ein Übertragungsmittel 15, beispielsweise ein mit der nicht mehr dargestellten Bremse in Verbindung stehendes Bremsseil oder Bremsgestänge, mittels eines Anlenkpunktes 18 befestigt ist.

Der Handhebel 11 ist beispielsweise als Rohr ausgebildet und an dem der Drehachse 13 entfernten Bereich mit einem Handgriff 16 versehen.

Ein Anschlag 17 für die Lösestellung, der beispielsweise an der Bedienkonsole 6 angeordnet oder ausgebildet sein kann, steht in der dargestellten senkrechten Stellung des Betätigungshebels 10 mit dem Handhebel 11 in Wirkverbindung.

Zur Betätigung des Mitnehmerelements 12 ist an dem Mitnehmerelement 12 eine senkrecht zur Zeichenebene angeordnete Mitnehmereinrichtung 19 ausgebildet. Die Mitnehmereinrichtung 19 kann beispielsweise als an dem Mitnehmerhebel 14 ausgebildeter Querriegel, insbesondere Querstift oder Querbügel, ausgestaltet sein. Die Mitnehmereinrichtung 19 ist bezüglich der Drehachse 13 gegenüberliegende zum Angriffspunkt des Übertragungsmittels 15 an dem Mitnehmerelement 12 angeordnet. In der dargestellten Lösestellung des Betätigungshebels 10 befindet sich die Mitnehmereinrichtung 19 in Anlage an dem Handhebel 11 aufgrund der von dem Übertragungsmittel 15 auf das Mitnehmerelement 12 ausgeübten Zugkraft.

Zur Verbindung des Handhebels 11 mit dem Mitnehmerelement 12 ist ein Kopplungselement 20 vorgesehen. Das Kopplungselement 20 ist als längsverschiebbarer Verriegelungsstift 21 ausgebildet, der am Handhebel 11 oder innerhalb des Handhebels 11 angeordnet ist und mit der Mitnehmereinrichtung 19 des Mitnehmerelement 12 in Wirkverbindung bringbar ist. Der Verriegelungsstift 21 ist mittels eines Betätigungsmittels 22, beispielsweise eines an der Stirnseite des Handhebels 11 angeordneten Betätigungsknopfes 23, betätigbar. Mittels einer Feder 24 ist der Verriegelungsstift 21 nach in der Figur 1 oben beaufschlagt.

An der Bedienkonsole 6 kann weiterhin eine Anschlag 25 für die Bremsstellung angeordnet sein, der mit dem Mitnehmerelement 12 in Verbindung bringbar ist.

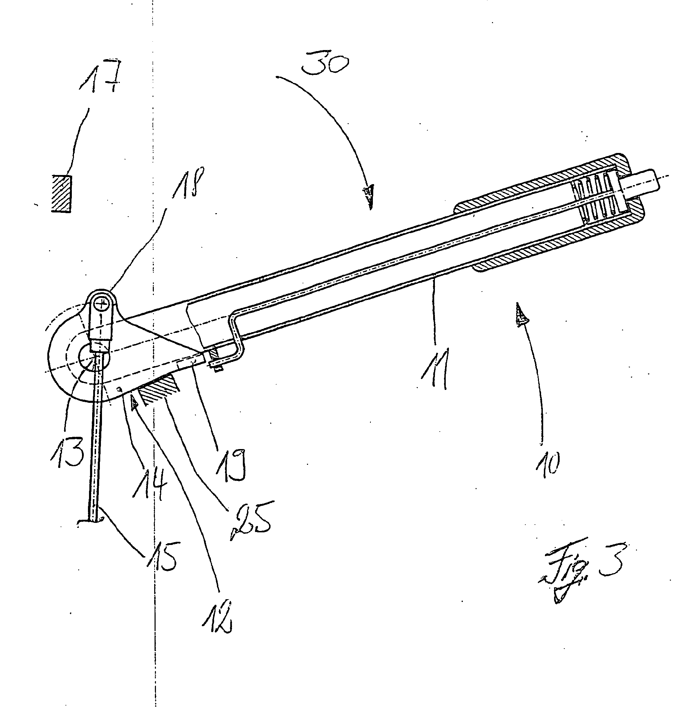

Zum Beaufschlagen der Bremse von der in der Figur 2 dargestellten Lösestellung in die Bremsstellung wird der Handhebel 11 in Richtung 30 gemäß Figur 3 beaufschlagt. Über die Mitnehmereinrichtung 19 wird das Mitnehmerelement 12 bei einem Verschwenken des Bedienhebels 11 ebenfalls in Richtung 30 verschwenkt. Der Anschlag 25 für die Bremsstellung begrenzt die Bewegung des Mitnehmerelements 12 und somit des Handhebels 11 in der Bremsstellung.

Der Anlenkpunkt 18 befindet sich in der dargestellten Bremsstellung des Betätigungshebels 10 rechts von der Drehachse 13, so dass eine Totpunktverriegelung erzielt wird. Das Mitnehmerelement 12 wird durch die von dem Übertragungsmittel 15 ausgeübte Zugkraft in Anlage an den Anschlag 25 und somit in der Bremsstellung gehalten, wodurch über das Übertragungsmittel 15 die Bremse in die Bremsstellung betätigt ist.

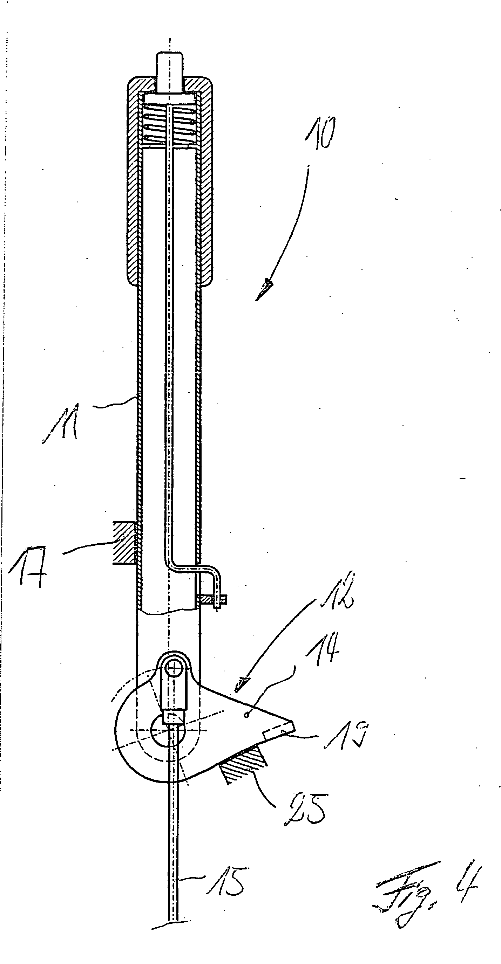

In der Bremsstellung des Mitnehmerelements 12 kann der Handhebel 11 in die Lösestellung gemäß der Figur 4 zurückverschwenkt werden. Mittels einer nicht mehr dargestellten Feststelleinrichtung, beispielsweise einer Feder oder eines Einrastelements kann hierbei der Handhebel 11 in Anlage an den Anschlag 17 gehalten werden, um eine Zurückfallen des Handhebels 11 oder ein Klappern im Betrieb des Flurförderzeugs zu vermeiden. In der Bremsstellung der Bremse kann somit der Handhebel 11 in die Lösestellung zurückverschwenkt werden, wodurch bei an dem Vorderaufbau des Flurförderzeugs 1 angeordneter Betätigungseinrichtung 10 der Handhebel 11 keine Behinderung für die Bedienperson während des Auf- und Absteigens bildet. Zudem ist durch das Zurückschenken des Handhebels 11 in die Lösestellung bei in der Bremsstellung beaufschlagter Bremse der Handhebel 11 vor einer ungewollten Betätigung geschützt, wodurch ein zufälliges Lösen der Bremse bei einer unbeabsichtigten Betätigung des Handhebels 11 wirkungsvoll vermieden werden kann.

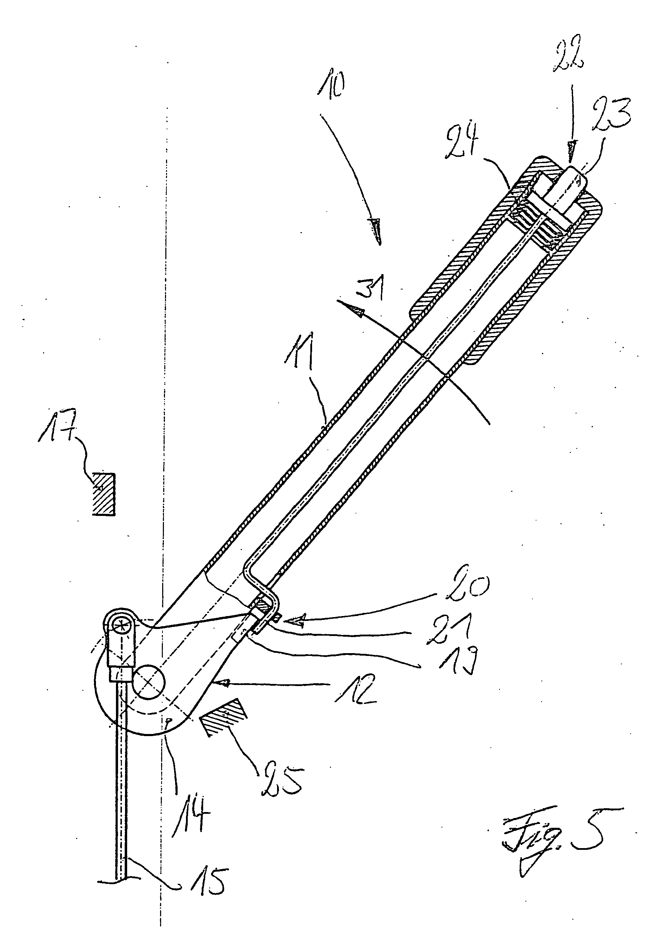

Zum Lösen der Bremse wird der Handhebel 11 ausgehend von der in der Figur 4 dargestellten Stellung in die in der Figur 3 dargestellte Stellung geschwenkt. Durch Betätigen des als Betätigungsknopf 23 ausgebildeten Betätigungsmittels 22 entgegen der Kraft der Feder 24 wird das als Verriegelungsstift 21 ausgebildete Kopplungselemeüt 20 in Richtung zum Mitnehmerelement 12 verschoben und verbindet den Handhebel 11 mit dem Mitnehmerelement 12. Der Verriegelungsstift 21 kann hierbei mit der dem Handhebel 11 gegenüberliegenden Fläche der als Querriegel ausgebildeten Mitnehmereinrichtung 19 in Wirkverbindung gelangen. Bei betätigtem Betätigungsmittel 22 kann somit das Mitnehmerelement 12 zusammen mit dem Handhebel 11 - wie in Figur 5 dargestellt - in Richtung 31 in die in der Figur 1 dargestellte Lösestellung beaufschlagt werden, in der die Bremse gelöst ist.

## Patentansprüche

1. Betätigungseinrichtung für eine manuell betätigbare Bremse, insbesondere Feststellbremse, eines Flurförderzeugs, mit einem schwenkbar gelagerten Betätigungshebel (10), der mittels eines Übertragungsmittels (15) mit der Bremse in Wirkverbindung steht, wobei der Betätigungshebel (10) einen Handhebel (11) und ein mittels des Handhebels (11) betätigbares Mitnehmerelement (12) aufweist, das Mitnehmerelement (12) mit dem Übertragungsmittel (15) in Verbindung steht und bei in der Bremsstellung oder der Lösestellung befindlichem Mitnehmerelement (12) der Handhebel (11) bewegbar ist, **dadurch gekennzeichnet, dass** in der Bremsstellung eine Totpunktverriegelung des Mitnehmerelements (12) vorgesehen ist.

2. Betätigungseinrichtung nach Anspruch 1, **dadurch gekennzeichnet, dass** bei in der Bremsstellung befindlichem Mitnehmerelement (12) der Handhebel (11) in die Lösestellung betätigbar ist.

3. Betätigungseinrichtung nach Anspruch 1 oder 2, **dadurch gekennzeichnet, dass** das Mitnehmerelement (12) als Mitnehmerhebel (14) ausgebildet ist, wobei der Handhebel (11) und der Mitnehmerhebel (14) um eine gemeinsame Drehachse (13) schwenkbar gelagert sind.

4. Betätigungseinrichtung nach einem der Ansprüche 1 bis 3, **dadurch gekennzeichnet, dass** das Mitnehmerelement (12) mit einer mit dem Handhebel (11) in Wirkverbindung bringbaren Mitnehmereinrichtung (19) versehen ist.

5. Betätigungseinrichtung nach Anspruch 4, **dadurch gekennzeichnet, dass** die Mitnehmereinrichtung (19) als Querriegel ausgebildet ist.

6. Betätigungseinrichtung nach einem der Ansprüche 1 bis 5, **dadurch gekennzeichnet, dass** das Mitnehmerelement (12) als Kniehebel ausgebildet ist.

7. Betätigungseinrichtung nach einem der Ansprüche 1 bis 6, **dadurch gekennzeichnet, dass** ein Anschlag (17) für die Lösestellung vorgesehen ist, der mit dem Handhebel (11) in Wirkverbindung bringbar ist.

8. Betätigungseinrichtung nach Anspruch 7, **dadurch gekennzeichnet, dass** der Handhebel (11) an dem Anschlag für die Lösestellung mittels einer Feststelleinrichtung festsetzbar ist.

9. Betätigungseinrichtung nach Anspruch 8, **dadurch gekennzeichnet, dass** die Feststelleinrichtung als Feder oder Einrastelement ausgebildet ist.

10. Betätigungseinrichtung nach einem der Ansprüche 1 bis 9, **dadurch gekennzeichnet, dass** ein Anschlag (25) für die Bremsstellung vorgesehen ist, der mit dem Mitnehmerelement (12) in Wirkverbindung bringbar ist.

11. Betätigungseinrichtung nach einem der Ansprüche 1 bis 10, **dadurch gekennzeichnet, dass** ein Kopplungselement (20) vorgesehen ist mittels dem das Mitnehmerelement (12) mit dem Handhebel (11) zum Beaufschlagen des Mitnehmerelements (12) von der Bremsstellung in die Lösestellung verbindbar ist.

12. Betätigungseinrichtung nach Anspruch 11, **dadurch gekennzeichnet, dass** das Kopplungselement (20) als Verriegelungsstift (21) ausgebildet ist.

13. Betätigungseinrichtung nach Anspruch 11 oder 12, **dadurch gekennzeichnet, dass** das Kopplungselement (20) am Handhebel (11) angeordnet ist und mit der Mitnehmereinrichtung (19) des Mitnehmerelements (12) in Wirkverbindung bringbar ist.

14. Betätigungseinrichtung nach einem der Ansprüche 11 bis 13, **dadurch gekennzeichnet, dass** das Kopplungselement (20) mittels eines Betätigungsmittels (22) betätigbar ist.

15. Betätigungseinrichtung nach Anspruch 14, **dadurch gekennzeichnet, dass** das Betätigungsmittel (22) als an dem Handhebel (11) angeordneter Betätigungsknopf (23) ausgebildet ist.

16. Betätigungseinrichtung nach einem der Ansprüche 1 bis 15, **dadurch gekennzeichnet, dass** das Mitnehmerelement (12) in der Bremsstellung mittels eines Feststellelement festsetzbar ist.

17. Betätigungseinrichtung nach Anspruch 16, **dadurch gekennzeichnet, dass** das Feststellelement als Einrastelement ausgebildet ist.

18. Betätigungseinrichtung nach Anspruch 16 oder 17, **dadurch gekennzeichnet, dass** das Feststellelement mittels des Betätigungsmittels (22) lösbar ist.

19. Betätigungseinrichtung nach einem der vorangegangenen Ansprüche, **dadurch gekennzeichnet, dass** die Betätigungseinrichtung (10) am Vorderaufbau (6) eines als Gegengewichtsgabelstapler ausgebildeten Flurförderzeugs (1) angeordnet ist.

## Claims

1. Actuating device for a manually actuable brake, in particular a handbrake, of an industrial truck, having an actuating lever (10) which is mounted such that it can pivot and is operatively connected to the brake by means of a transmission means (15), the actuating lever (10) having a hand lever (11) and a driver element (12) which can be actuated by means of the hand lever (11), the driver element (12) being connected to the transmission means (15), and it being possible for the hand lever (11) to be moved when the driver element (12) is located in the braking position or the release position, **characterized in that** dead-centre latching of the driver element (12) is provided in the braking position.

2. Actuating device according to Claim 1, **characterized in that**, when the driver element (12) is located in the braking position, the hand lever (11) can be actuated into the release position.

3. Actuating device according to Claim 1 or 2, **characterized in that** the driver element (12) is in the form of a driver lever (14), the hand lever (11) and the driver lever (14) being mounted such that they can pivot about a common axis of rotation (13).

4. Actuating device according to one of Claims 1 to 3, **characterized in that** the driver element (12) is provided with a driver device (19) which can be operatively connected to the hand lever (11).

5. Actuating device according to Claim 4, **characterized in that** the driver device (19) is in the form of a crossbeam.

6. Actuating device according to one of Claims 1 to 5, **characterized in that** the driver element (12) is in the form of a toggle lever.

7. Actuating device according to one of Claims 1 to 6, **characterized in that** a stop (17) is provided for the release position and can be operatively connected to the hand lever (11).

8. Actuating device according to Claim 7, **characterized in that** the hand lever (11) can be fixed at the stop for the release position by means of a fixing device.

9. Actuating device according to Claim 8, **characterized in that** the fixing device is in the form of a spring or a latch-in element.

10. Actuating device according to one of Claims 1 to 9, **characterized in that** a stop (25) is provided for the braking position which can be operatively connected to the driver element (12).

11. Actuating device according to one of Claims 1 to 10, **characterized in that** a coupling element (20) is provided, by means of which the driver element (12) can be connected to the hand lever (11) for the purpose of moving the driver element (12) from the braking position to the release position.

12. Actuating device according to Claim 11, **characterized in that** the coupling element (20) is in the form of a locking pin (21).

13. Actuating device according to Claim 11 or 12, **characterized in that** the coupling element (20) is arranged on the hand lever (11) and can be operatively connected to the driver device (19) of the driver element (12).

14. Actuating device according to one of Claims 11 to 13, **characterized in that** the coupling element (20) can be actuated by means of an actuating means (22).

15. Actuating device according to Claim 14, **characterized in that** the actuating means (22) is in the form of an actuating button (23) arranged on the hand lever (11).

16. Actuating device according to one of Claims 1 to 15, **characterized in that** the driver element (12) can be fixed in the braking position by means of a fixing element.

17. Actuating device according to Claim 16, **characterized in that** the fixing element is in the form of a latch-in element.

18. Actuating device according to Claim 16 or 17, **characterized in that** the fixing element can be released by means of the actuating means (22).

19. Actuating device according to one of the preceding claims, **characterized in that** the actuating device (10) is arranged on the front body (6) of an industrial truck (1) in the form of a counterweight fork-lift truck.

## Revendications

1. Dispositif d'actionnement pour un frein actionnable manuellement, notamment un frein de stationnement d'un chariot de manutention, comprenant un levier d'actionnement (10) monté de manière pivotante, qui est en liaison coopérante avec le frein au moyen d' un moyen de transmission (15), le levier d'actionnement (10) présentant un levier à main (11) et un élément d'entraînement (12) pouvant être actionné au moyen du levier à main (11), l'élément d'entraînement (12) étant en liaison avec le moyen de transmission (15) et le levier à main (11) pouvant être déplacé lorsque l'élément d'entraînement (12) se trouve dans la position de freinage ou dans la position de libération, **caractérisé en ce que** dans la position de freinage, un verrouillage du point mort de l'élément d'entraînement (12) est prévu.

2. Dispositif d'actionnement selon la revendication 1, **caractérisé en ce que** le levier à main (11) peut être actionné dans la position de libération lorsque l'élément d'entraînement (12) se trouve dans la position de freinage.

3. Dispositif d'actionnement selon la revendication 1 ou 2, **caractérisé en ce que** l'élément d'entraînement (12) est réalisé sous la forme d'un levier d'entraînement (14), le levier à main (11) et le levier d'entraînement (14) étant montés de manière à pouvoir pivoter autour d'un axe de rotation commun (13).

4. Dispositif d'actionnement selon l'une quelconque des revendications 1 à 3, **caractérisé en ce que** l'élément d'entraînement (12) est pourvu d'un dispositif d'entraînement (19) pouvant être amené en liaison coopérante avec le levier à main (11).

5. Dispositif d'actionnement selon la revendication 4, **caractérisé en ce que** le dispositif d'entraînement (19) est réalisé sous la forme d'un verrou transversal.

6. Dispositif d'actionnement selon l'une quelconque des revendications 1 à 5, **caractérisé en ce que** l'élément d'entraînement (12) est réalisé sous la forme d'un levier à genouillère.

7. Dispositif d'actionnement selon l'une quelconque des revendications 1 à 6, **caractérisé en ce qu'**il est prévu une butée (17) pour la position de libération, laquelle peut être amenée en liaison coopérante avec le levier à main (11).

8. Dispositif d'actionnement selon la revendication 7, **caractérisé en ce que** le levier à main (11) peut être fixé sur la butée pour la position de libération au moyen d'un dispositif de fixation.

9. Dispositif d'actionnement selon la revendication 8, **caractérisé en ce que** le dispositif de fixation est réalisé sous la forme d'un ressort ou d'un élément d'encliquetage.

10. Dispositif d'actionnement selon l'une quelconque des revendications 1 à 9, **caractérisé en ce qu'**il est prévu une butée (25) pour la position de freinage, laquelle peut être amenée en liaison coopérante avec l'élément d'entraînement (12).

11. Dispositif d'actionnement selon l'une quelconque des revendications 1 à 10, **caractérisé en ce qu'**il est prévu un élément d'accouplement (20) au moyen duquel l'élément d'entraînement (12) peut être connecté au levier à main (11) pour solliciter l'élément d'entraînement (12) de la position de freinage dans la position de libération.

12. Dispositif d'actionnement selon la revendication 11, **caractérisé en ce que** l'élément d'accouplement (20) est réalisé sous la forme d'une broche de verrouillage (21).

13. Dispositif d'actionnement selon la revendication 11 ou 12, **caractérisé en ce que** l'élément d'accouplement (20) est disposé sur le levier à main (11) et peut être amené en liaison coopérante avec le dispositif d'entraînement (19) de l'élément d'entraînement (12).

14. Dispositif d'actionnement selon l'une quelconque des revendications 11 à 13, **caractérisé en ce que** l'élément d'accouplement (20) peut être actionné au moyen d'un moyen d'actionnement (22).

15. Dispositif d'actionnement selon la revendication 14, **caractérisé en ce que** le moyen d'actionnement (22) est réalisé sous la forme d'un bouton d'actionnement (23) disposé sur le levier à main (11).

16. Dispositif d'actionnement selon l'une quelconque des revendications 1 à 15, **caractérisé en ce que** l'élément d'entraînement (12) peut être fixé dans la position de freinage au moyen d'un élément de fixation.

17. Dispositif d'actionnement selon la revendication 16, **caractérisé en ce que** l'élément de fixation est réalisé sous la forme d'un élément d'encliquetage.

18. Dispositif d'actionnement selon la revendication 16 ou 17, **caractérisé en ce que** l'élément de fixation peut être libéré au moyen du moyen d'actionnement (22).

19. Dispositif d'actionnement selon l'une quelconque des revendications précédentes, **caractérisé en ce que** le dispositif d'actionnement (10) est disposé sur la structure avant (6) d'un chariot de manutention (1) réalisé sous forme d'un chariot élévateur à fourche à contrepoids.
